# EUROPÄISCHE PATENTANMELDUNG

(11) **EP 2 551 412 A1**
(43) Veröffentlichungstag der Anmeldung: **30.01.2013**
(21) Anmeldenummer: 12002911.1
(22) Anmeldetag: 25.04.2012
(51) Int. Cl.: E02F 9/12, E02F 9/08

(54) **Drehbühnenelement für eine Baumaschine**

(30) Priorität: 27.07.2011 DE 102011109080
(71) Anmelder: Liebherr-Hydraulikbagger GmbH, 88457 Kirchdorf/Iller (DE)
(72) Erfinder: Schott, Stefan, Dipl.-Ing., 87700 Memmingen (DE); Bolz, Gerhard, Dipl.-Ing., 88457 Kirchdorf an der Iller (DE)
(74) Vertreter: Laufhütte, Dieter

(57) **Zusammenfassung**

Die vorliegende Erfindung betrifft ein Drehbühnenelement für eine Baumaschine, insbesondere für einen Mobilbagger, sowie eine Baumaschine, insbesondere einen Mobilbagger.

## Beschreibung

Die vorliegende Erfindung betrifft ein Drehbühnenelement für eine Baumaschine, insbesondere für einen Mobilbagger, sowie eine Baumaschine, insbesondere einen Mobilbagger.

Bei Baumaschinen, die einen Unterwagen, der ein Fahrgestell trägt, sowie einen an dem Unterwagen angelenkten Oberwagen aufweisen, ist es üblich, dass die Baumaschinen sich in der Art des verwendeten Fahrwerks unterscheiden. Insbesondere ist möglich, dass der Unterwagen ein Fahrwerk trägt, was beispielsweise als einfaches Radfahrwerk oder auch als Kettenfahrwerk ausgeführt sein kann. An diesem das Fahrwerk tragenden Unterwagen ist wiederum der Oberwagen der Baumaschine vorzugsweise drehbar angelenkt.

Der Oberwagen besteht dabei selbst im Wesentlichen aus einer Drehbühne, auf dessen Oberseite und der in Fahrtrichtung seitlich gelegenen Seitenwandung, insbesondere der rechts gelegenen Seitenwandungen, vorzugsweise alle Module des Oberwagens an standardisierten Schnittstellen angeordnet sind.

Aus dem Stand der Technik ist es derzeit bekannt, die Drehbühnen als Einzelauftrag je Baumaschinentyp zu fertigen. Dabei erfolgt der Zusammenbau der Drehbühne je nach Baumaschinentyp an einem gesonderten, festen Arbeitsplatz. Ein weiterer Nachteil besteht darin, dass eine Optimierung des Verschnittes des für die Drehbühne notwendigen Materials geräteübergreifend nicht möglich ist.

Es ist daher die Aufgabe der vorliegenden Erfindung, eine Drehbühne der eingangs genannten Art in vorteilhafter Weise weiterzubilden, insbesondere dahingehend, dass eine Drehbühne für eine Baumaschine kostengünstiger und flexibler herstellbar ist.

Diese Aufgabe wird erfindungsgemäß gelöst durch eine Drehbühne für eine Baumaschine mit den Merkmalen des Anspruchs 1. Danach ist vorgesehen, dass ein Drehbühnenelement für eine Baumaschine einen Grundkörper aufweist, wobei der Grundkörper im Wesentlichen aus einer Grundplatte und aus zwei zur Fahrzeuglängsachse ausgerichteten Hauptstegen besteht, wobei die Hauptstege auf der Grundplatte angeordnet sind und durch Querstege auf einer durch die Arbeitsausrüstungs- und Fahrerarbeitsplatzbreite festgelegte Position fixiert sind.

Insbesondere kann es sich bei der Baumaschine um einen Mobilbagger handeln.

Durch diesen Aufbau eines Drehbühnenelementes wird es möglich, eine vordefinierte und baureihenübergeifend einsetzbare Struktur für ein Drehbühnenelement für eine Baumaschine bereitstellen zu können. Durch den Aufbau mittels eines Grundkörpers, Hauptstegen und Querstegen ist eine einfache und zugleich stabile Struktur möglich. Das Drehbühnenelement kann insbesondere in mehreren, vorzugsweise sämtliche Baureihen einer Baumaschinenart, insbesondere bei Mobilbagger stets gleich ausgeführt sein. Hierdurch ergibt sich der Vorteil, dass eine Drehbühne für eine Baumaschine kostengünstiger in der Fertigung und Montage hergestellt und behandelt werden kann. Darüber hinaus ergibt sich eine größere Flexibilität in der Produktionslogistik.

Des Weiteren kann vorgesehen sein, dass das Drehbühnenelement modular ausgebildet und/oder als Standardbauteil ausgebildet ist.

Es ist möglich, dass das Drehbühnenelement wenigstens eine Schnittstelle aufweist, mittels derer das Drehbühnenelement mit wenigstens einem optional wählbaren Seitenteilmodul der Baumaschine verbindbar ist. Derartige optional wählbare Seitenmodule können beispielsweise das Seitenteilmodul-Bau oder das Seitenteilmodul-LH, auf dem insbesondere hydraulische Erhöhungen und Kippvorrichtungen montierbar sind, sein.

Denkbar ist weiter, dass die Hauptstege im Wesentlichen senkrecht auf der Grundplatte angeordnet sind.

Darüber hinaus kann vorgesehen sein, dass das Drehbühnenelement wenigstens eine Schnittstelle aufweist, mittels derer das Drehbühnenelement mit wenigstens einer Komponente des Oberwagens der Baumaschine verbindbar ist. Dabei kann es sich vorzugsweise um eine standardisierte Schnittstelle handeln. Vorzugsweise ist weiter vorgesehen, dass die Komponente des Oberwagens ein Fahrerarbeitsplatz, ein Hydrauliktank, ein Kraftstofftank, ein Aufstiegskasten, ein Antriebsmodul, ein Ballastgewicht und/oder eine Steuerschieberkonsole ist und/oder umfasst.

Des Weiteren ist denkbar, dass die Grundplatte, die Hauptstege und/oder die Querstege zumindest teilweise lösbar miteinander verbunden sind, insbesondere lösbar verschraubt und/oder lösbar verbolzt sind.

Ferner ist möglich, dass die Grundplatte, die Hauptstege und/oder die Querstege zumindest teilweise unlösbar miteinander verbunden sind, insbesondere verschweißt sind.

Außerdem ist möglich, dass der Grundkörper eine zumindest teilweise käfigartige und/oder zumindest teilweise kastenartige Struktur aufweist, wobei die begrenzenden Elemente der Struktur insbesondere die Grundplatte, die Hauptstege und/oder die Querstege sind.

Darüber hinaus kann vorgesehen sein, dass die Hauptstege zumindest teilweise trapezförmig ausgebildet sind.

Des Weiteren betrifft die vorliegende Erfindung eine Baumaschine mit den Merkmalen des Anspruchs 10. Danach ist vorgesehen, dass eine Baumaschine, insbesondere ein Mobilbagger, wenigstens ein Drehbühnenelement nach einem der Ansprüche 1 bis 9 aufweist.

Weitere Einzelheiten und Vorteile der Erfindung sollen nun anhand eines in der Zeichnung dargestellten Ausführungsbeispiels erläutert werden.

Es zeigen:
- Figur 1:: eine perspektivische Explosionsdarstellung eines Oberwagens einer Baumaschine;
- Figur 2:: eine weitere perspektivische Darstellung des Oberwagens einer Baumaschine;
- Figur 3:: eine Draufsicht auf eine erfindungsgemäße Drehbühne; und
- Figur 4:: eine perspektivische Explosionsdarstellung der Drehbühne sowie der damit zu kombinierenden weiteren Module der Baumaschine.

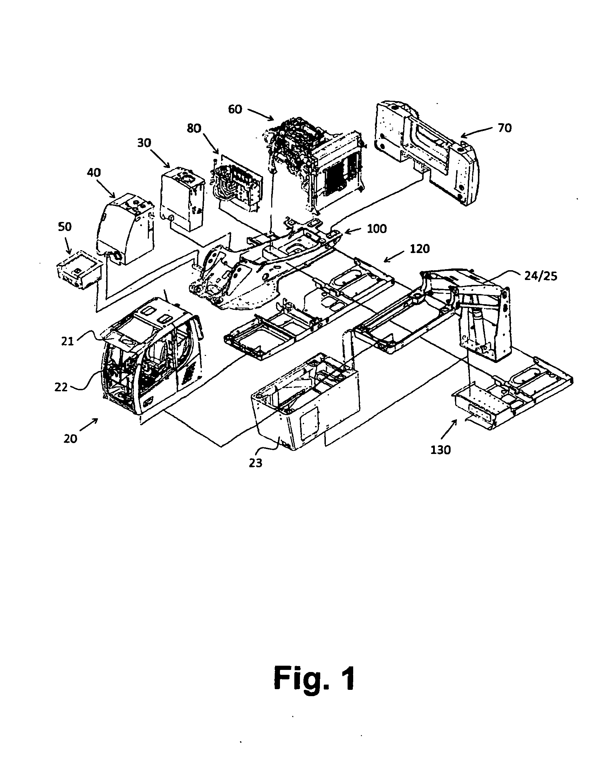

Figur 1 zeigt in perspektivischer Explosionsdarstellung die Module eines Oberwagens einer Baumaschine, hier eines Mobilbaggers.

Der Oberwagen des Mobilbaggers besteht dabei selbst im Wesentlichen aus einer Drehbühne 10, auf dessen Oberseite und der in Fahrtrichtung rechts gelegenen Seitenwandung alle Module des Oberwagens an standardisierten Schnittstellen angeordnet sind. Die Module des Oberwagens bestehen aus der Drehbühne 10, auf welcher der Fahrerarbeitsplatz 20 angeordnet ist. Der Fahrerarbeitsplatz 20 besteht bei einem Mobilbagger im Wesentlichen aus einer Fahrerkabine 21 und einer Steuereinheit 22. Bei einer als Umschlaggerät ausgeführten Baumaschine wird dieser Fahrerarbeitsplatz 20 optional durch starre Erhöhungen 23, hydraulische Erhöhungen 24 und Kippvorrichtungen 25 ergänzt.

Der Hydrauliktank 30, der Kraftstofftank 40 und der Aufstiegkasten 50 werden ebenfalls auf die Oberseite oder der in Fahrtrichtung rechts gelegenen Seitenwandung der Drehbühne 10 befestigt. Dabei kann der Kraftstofftank 40 in verschiedenen Ausführungen hinsichtlich der Kraftstoffvolumina ausgeführt werden. Das Antriebsmodul 60 wird ebenfalls auf der Oberseite oder der in Fahrtrichtung rechts gelegenen Seitenwandung der Drehbühne 10 befestigt.

Das Antriebsmodul 60 kann entweder eine Verbrennungskraftmaschine, einen Elektromotor oder eine Brennstoffzelle mit Akkumulatoren enthalten. Denkbar ist auch, dass sowohl eine Verbrennungskraftmaschine, ein Elektromotor und/oder eine Brennstoffzelle mit Akkumulatoren als Hybridkonzept vorgesehen ist.

Das Ballastgewicht 70 ist ebenfalls an der Oberseite der Drehbühne 10 angebracht.

Durch die Vereinheitlichung der Oberwagenbreite und -höhe können nun gerätetypübergreifend die Ballastgewichte 70 ausgetauscht werden und somit kann das Traglastverhalten der Maschine sehr einfach verändert werden.

Darüber hinaus ist eine Steuerschieberkonsole 80 vorgesehen, welche die gesamte Ventilanordnung beinhaltet. Diese Steuerschieberkonsole 80 ist dabei ebenfalls auf der Oberseite oder der in Fahrtrichtung rechts gelegenen Seitenwandung der Drehbühne 10 befestigt.

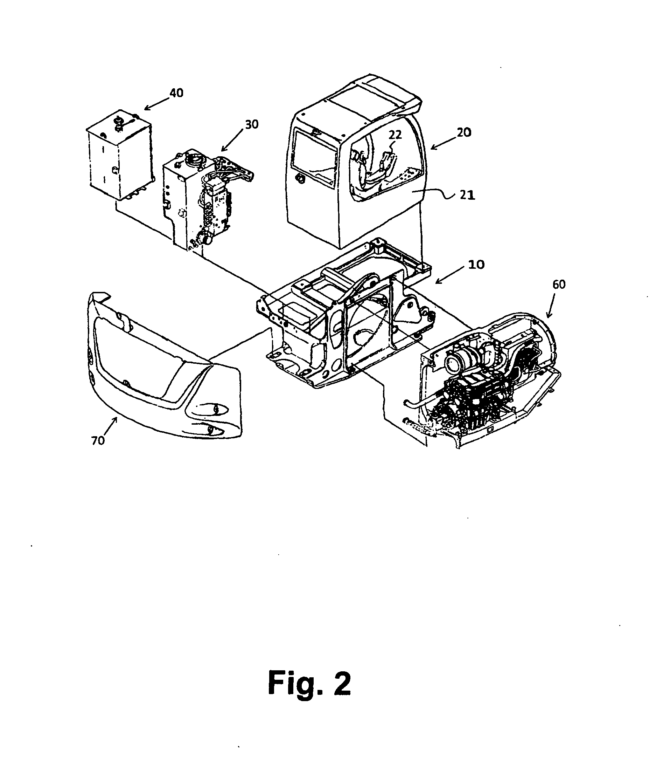

Figur 2 zeigt die vorgenannten Komponenten des Oberwagens der Baumaschine in einer weiteren perspektivischen Ansicht.

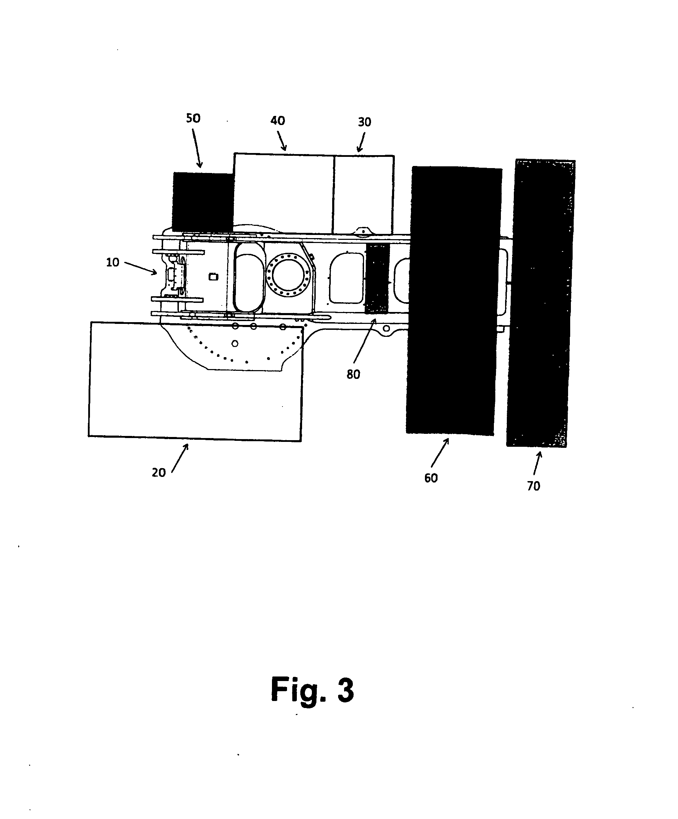

Figur 3 zeigt ferner eine Draufsicht auf die Drehbühne 10, aus der sich die Anordnung des Fahrerarbeitsplatzes 20, des Hydrauliktanks 30, des Kraftstofftanks 40, des Aufstiegskastens 50, des Antriebsmoduls 60, das Ballastgewicht 70 und der Steuerschieberkonsole 80 ergibt.

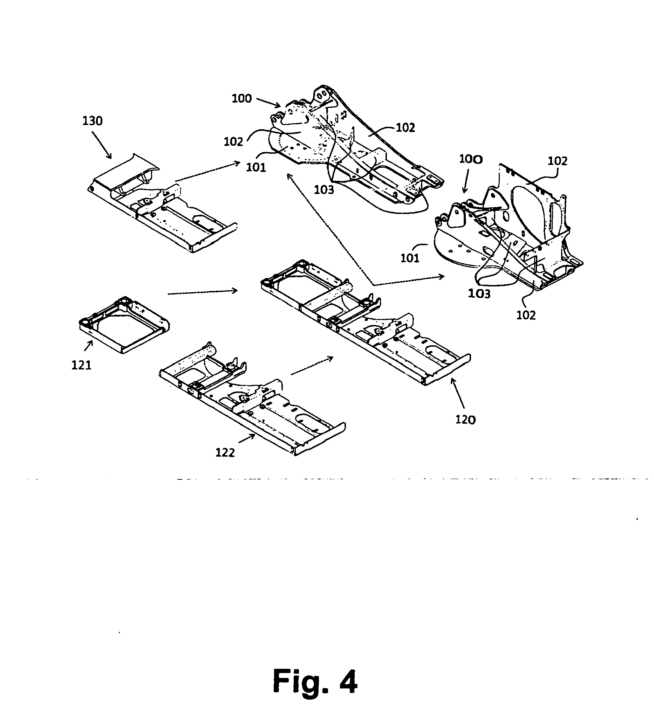

Wie dies weiter im Einzelnen aus Figur 4 hervorgeht, wird die Drehbühne als zentrales Modul ausgeführt, welches soweit als möglich auf einen kompakten Grundkörper 100 reduziert ist. Dieser kompakte Grundkörper 100 besteht im Wesentlichen aus einer Grundplatte 101 und aus zwei in Fahrzeugslängsachse ausgerichteten Hauptstegen 102. Diese Hauptstege 102 stehen senkrecht auf der Grundplatte 101 und werden durch Querstege 103 auf eine durch die Arbeitsausrüstungs- und Fahrerarbeitsplatzbreite festgelegte Position fixiert. Dieses zentrale Modul 100 bzw. der Grundkörper 100 weist definierte Schnittstellen zu den optional wählbaren Seitenmodulen auf, wobei derartige Seitenmodule beispielsweise das Seitenteilmodul-Bau 120 oder das Seitenteilmodul-LH 130, auf dem hydraulische Erhöhungen 24 und Kippvorrichtungen 25 montiert werden, sein können.

Der Grundkörper 100 weist eine zumindest teilweise käfigartige und zumindest teilweise kastenartige Struktur auf, wobei die begrenzenden Elemente der Struktur die Grundplatte 101, die Hauptstege 102 und die Querstege 103 sind. Darüber hinaus ist vorgesehen, dass die Hauptstege 102 zumindest teilweise trapezförmig ausgebildet sind. Dabei sind insbesondere im oberen Bereich und am vorderen Teil der Hauptstege 102 Anlenkungspunkte für weitere Komponenten des Oberwagens vorgesehen.

Die Schnittstellen der Oberwagenhauptkomponenten, beispielsweise der Oberwagenhauptkomponenten Fahrerarbeitsplatz 20, Hydrauliktank 30, Kraftstofftank 40, Aufstiegskasten 50, Antriebsmodul 60, Ballastgewicht 70 und Steuerschieberkonsole 80 sind standardisiert, so dass diese Oberwagenhauptkomponenten baureihenübergreifend ohne Weiteres an der Drehbühne 10 angeschlossen werden können. Hierdurch ergibt sich der Vorteil, die Drehbühne 10 baureihenübergreifend für mehrere Baureihen einer Baumaschine einsetzen zu können, wodurch sich eine Verringerung der Fertigungs- und Montagekosten ergibt.

Es ist also nunmehr möglich, die einzelnen Module, die im Zusammenhang mit einer Drehbühne 10 benötigt werden, auftragsunabhängig produzieren zu können. So kann beispielsweise bei einem Auftragseingang bedarfsgerecht gefertigt werden. Denkbar ist auch hierdurch, aufgrund der nunmehr möglichen baureihenübergreifenden Fertigung und der sich hieraus ergebenden höheren Stückzahlen die Fahrerstandsaufnahme 121, die Kühleraufnahme 122, welche gemeinsam das Seitenteil 120 bilden, nunmehr nicht nur als Schweißbaugruppe zu fertigen, sondern auch in alternativen Verfahren wie Stahlguss oder durch Tiefziehen einzelner Bauteile dieses Modul kostengünstiger herstellen zu können. Denkbar ist beispielsweise, dieses Seitenteil 120 als Auslastungsbauteil bei rüstzeitbedingten Roboterstillstandszeiten nutzen zu können.

Denkbar ist die Hauptmodule der Drehbühne 10 entweder verschweißt oder miteinander lösbar zu fertigen. Ferner ist möglich, dass eine Kombination aus beiden Fertigungsverfahren Anwendung findet, dass also einige Bestandteile der Drehbühne 10 verschweißt werden, während wiederum andere Bestandteile der Drehbühne 10 lösbar verbunden sind.

In einem Fall, in dem die Module der Drehbühne 10 bzw. die standardisierten Schnittstellen miteinander verschweißt oder lösbar verbunden sind, ist es möglich, auf etwaige Auftragsänderungen noch während der Produktion der Drehbühne 10 einzugehen und hierdurch Kundenwünsche besser erfüllen zu können.

Weiter ist es möglich, dass in einem Fall, in dem die Module lösbar miteinander verbunden sind, schon vor einer grundsätzlich notwendigen spanenden Bearbeitung ein Korrosionsschutz durch Feuerverzinken oder ähnliche Tauchverfahren erhalten werden kann, so dass die sich in der Fertigung befindenden Module auch im Freien gelagert werden können. Dies ermöglicht es, Lagerungskapazitäten bedarfsgerecht einsetzen zu können und auch kostengünstige Lagerungsmöglichkeiten nutzen zu können.

Durch den modularen Aufbau der Drehbühne 10 und durch die kompakten Abmessungen der Bestandteile der Drehbühne 10 ist es möglich, einen platzsparenden und damit kostengünstigen Transport zu ermöglichen. Ferner ist es auch möglich, kostengünstige und einfache Zwischenlagerungen durchführen zu können.

Ein weiterer Vorteil durch die modulare Bauweise sowie die lösbaren Verbindungen der Bestandteile der Drehbühne 10 besteht darin, dass in einem Schadensfall nur das beschädigte Modul der Drehbühne 10 gewechselt werden muss.

## Patentansprüche

1. Drehbühnenelement für eine Baumaschine, insbesondere für einen Mobilbagger, wobei das Drehbühnenelement einen Grundkörper (100) aufweist, wobei der Grundkörper (100) im Wesentlichen aus einer Grundplatte (101) und aus zwei zur Fahrzeuglängsachse ausgerichteten Hauptstegen (102) besteht, wobei die Hauptstege (102) auf der Grundplatte (101) angeordnet sind und durch Querstege (103) auf einer durch die Arbeitsausrüstungs- und Fahrerarbeitsplatzbreite festgelegte Position fixiert sind.

2. Drehbühnenelement nach Anspruch 1, **dadurch gekennzeichnet, dass** das Drehbühnenelement modular ausgebildet und/oder als Standardbauteil ausgebildet ist.

3. Drehbühnenelement nach Anspruch 1 oder 2, **dadurch gekennzeichnet, dass**
das Drehbühnenelement wenigstens eine Schnittstelle aufweist, mittels derer das Drehbühnenelement mit wenigstens einem optional wählbaren Seitenteilmodul der Baumaschine verbindbar ist.

4. Drehbühnenelement nach einem der vorhergehenden Ansprüche, **dadurch gekennzeichnet, dass** die Hauptstege (102) im Wesentlichen senkrecht auf der Grundplatte (101) angeordnet sind.

5. Drehbühnenelement nach einem der vorhergehenden Ansprüche, **dadurch gekennzeichnet, dass** das Drehbühnenelement wenigstens eine Schnittstelle aufweist, mittels derer das Drehbühnenelement mit wenigstens einer Komponente des Oberwagens der Baumaschine verbindbar ist, wobei es sich vorzugsweise um eine standardisierte Schnittstelle handelt und wobei weiter vorzugsweise die Komponente des Oberwagens ein Fahrerarbeitsplatz (20), ein Hydrauliktank (30), ein Kraftstofftank (40), ein Aufstiegskasten (50), ein Antriebsmodul (60), ein Ballastgewicht (70) und/oder eine Steuerschieberkonsole (80) ist und/oder umfasst.

6. Drehbühnenelement nach einem der vorhergehenden Ansprüche, **dadurch gekennzeichnet, dass** der Grundplatte (101), die Hauptstege (102) und/oder die Querstege (103) zumindest teilweise lösbar miteinander verbunden sind, insbesondere lösbar verschraubt und/oder lösbar verbolzt sind.

7. Drehbühnenelement nach einem der vorhergehenden Ansprüche, **dadurch gekennzeichnet, dass** die Grundplatte (101), die Hauptstege (102) und/oder die Querstege (103) zumindest teilweise unlösbar miteinander verbunden sind, insbesondere verschweißt sind.

8. Drehbühnenelement nach einem der vorhergehenden Ansprüche, **dadurch gekennzeichnet, dass** die Grundkörper (100) eine zumindest teilweise käfigartige und/oder zumindest teilweise kastenartige Struktur aufweist, wobei die begrenzenden Elemente der Struktur insbesondere die Grundplatte (101), die Hauptstege (102) und/oder die Querstege (103) sind.

9. Drehbühnenelement nach einem der vorhergehenden Ansprüche, **dadurch gekennzeichnet, dass** die Hauptstege (102) zumindest teilweise trapezförmig ausgebildet sind.

10. Baumaschine, insbesondere Mobilbagger, mit wenigstens einem Drehbühnenelement nach einem der vorhergehenden Ansprüche.
